# DEMANDE DE BREVET EUROPEEN

(11) **EP 2 262 196 A1**
(43) Date de publication de la demande: **15.12.2010**
(21) Numéro de dépôt: 10164978.8
(22) Date de dépôt: 04.06.2010
(51) Int. Cl.: H04L 29/06

(54) **Procédé et dispositif de gestion de communications électroniques sécurisées en milieu hétérogène**

(30) Priorité: 12.06.2009 FR 0902869
(71) Demandeur: Alcatel Lucent, 75007 Paris (FR)
(72) Inventeur: Cayeux, Christian, 67400, ILLKIRCH (FR)
(74) Mandataire: Nicolle, Olivier

(57) **Abrégé**

Le dispositif de gestion de communications électroniques sécurisées selon le protocole SIP comprend des moyens (SER) aptes à déclarer un profil sécurisé conforme au protocole SIP, à l'initiative et au profit d'un agent utilisateur choisi (UAA) et des moyens d'aiguillage aptes à aiguiller l'appel vers ce profil sécurisé en réponse à un appel émanant dudit agent utilisateur (UAA) situé en milieu sécurisé vers un agent utilisé situé en milieu non sécurisé (UAC).

## Description

La présente invention concerne la gestion des communications électroniques sécurisées en milieu hétérogène.

Elle trouve une application générale en télécommunication multimédia (son, image, données etc), et plus particulièrement pour les communications dont les sessions utilisent le protocole « Session Initiation Protocol » (SIP), spécifié par l'organisation de normalisation IETF dans le document RFC3261.

Le protocole SIP repose sur trois éléments : des agents utilisateur (« User Agent »), un serveur Registre (« Registrar ») et un serveur Proxy. Le plus souvent le serveur registre et le serveur « Proxy » sont intégrés dans un seul serveur appelé serveur d'appel ou « call server » en anglais. Les agents utilisateur s'enregistrent auprès du serveur d'appel pour signaler leur emplacement courant, appelé adresse IP. Le serveur d'appel gère alors les requêtes envoyées par les agents utilisateur. En pratique, les requêtes contiennent une adresse IP, associée à un identifiant URI (« Uniform Ressource Identifier »), l'une et l'autre étant stockés dans une base de données qu'interroge le serveur d'appel pour diriger les messages vers le destinataire lorsque les agents utilisateur ne connaissent pas leurs emplacements respectifs. Le plus souvent, le serveur d'appel gère des agents utilisateur qui sont situés dans des environnements hétérogènes en terme de sécurité, c'est-à-dire dans des environnements sécurisés, par exemple des agents utilisateur connectés à un réseau local à l'abri d'un pare feu, et/ou dans environnements non sécurisés, par exemple des agents utilisateur nomades connectés directement à Internet.

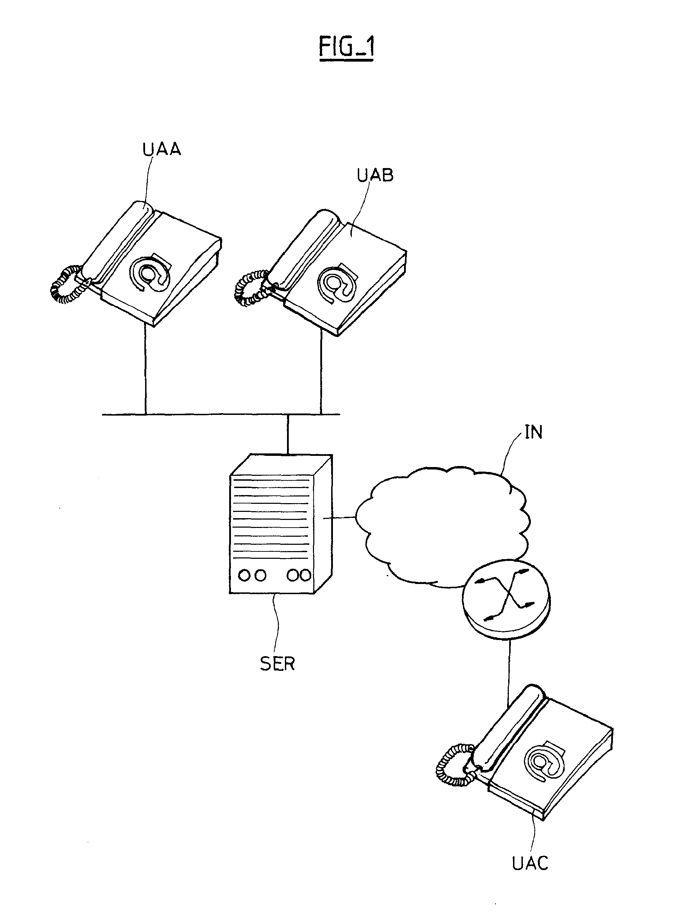

Par exemple, en référence à la **figure 1****,** on a représenté deux agents utilisateur UAA et UAB connectés physiquement à un réseau local sécurisé LAN à travers un pare feu. Aucune contrainte ou procédure de sécurité particulière n'est exigée lorsque les agents utilisateur UAA et UAB souhaitent communiquer entre eux. En revanche, lorsque l'utilisateur UAA souhaite communiquer avec un utilisateur UAC lui-même connecté au réseau Internet IN, c'est-à-dire à un réseau IN non sécurisé, des procédures de sécurité doivent être mises en place lors de l'établissement de l'appel par le serveur d'appel SER. Ainsi l'agent utilisateur (dénommé ci-après utilisateur) UAA doit utiliser un profil sécurisé, par exemple la procédure TLS (« Transport Layer Security », spécifié par l'IETF dans le document RFC5246) pour la signalisation SIP et la procédure SRTP (« Secure Real-Time Transport Protocol », spécifié par l'IETF dans le document RFC3711) pour le flux de données audio et media.

De telles procédures de sécurité sont globalement satisfaisantes. Néanmoins, les utilisateurs ignorent le profil des autres utilisateurs du serveur d'appel. C'est à ce dernier qu'incombe la gestion d'utiliser ou non une procédure sécurisée lors de la session d'appel. Or, lorsque le serveur d'appel reçoit une requête de l'utilisateur UAA qui est en milieu sécurisé vers l'utilisateur UAC qui est en milieu non sécurisé, comment le serveur d'appel doit informer l'utilisateur UAA d'utiliser une procédure sécurisée ? De même, comment renseigner le serveur d'appel sur la capacité à supporter une procédure sécurisée ou non d'un terminal d'utilisateur. Enfin, comment informer le serveur d'appel sur le fait qu'un utilisateur est en milieu sécurisé ou non ?

Le Demandeur s'est posé le problème de répondre à ces questions et apporter ainsi une meilleure gestion des communications électroniques sécurisées en milieu hétérogène.

La présente invention apporte justement une solution à ce problème.

Elle porte sur un procédé de gestion de communications électroniques utilisant le protocole SIP.
Selon un définition générale de l'invention, et conformément au protocol SIP, le logiciel applicatif de l'agent utilisateur situé en milieu non sécurisé procède automatiquement à son démarrage à une étape d'enregistrement par la méthode SIP REGISTER de son profil sécurisé. Puis intervient une étape d'aiguillage d'un appel vers cet agent utilisateur par le serveur en réponse, ceci étant réalisé par l' algorithme défini par l'invention.

Ainsi, grâce à l'invention, le serveur d'appel a connaissance des agents utilisateur qui utilisent une procédure de sécurité et des agents utilisateur qui sont situés en milieu non sécurisé et peut ainsi notifier à l'agent utilisateur d'utiliser une procédure de sécurité.

La présente invention a également pour objet un dispositif de gestion de communications électroniques utilisant le protocole SIP.

Selon un autre objet de l'invention, le dispositif comprend en outre des moyens aptes à déclarer un profil sécurisé conforme au protocole SIP, à l'initiative et au profit du logiciel applicatif d'un agent utilisateur choisi et des moyens d'aiguillage aptes à aiguiller l'appel vers ce profil sécurisé en réponse à un appel émanant dudit agent utilisateur situé en milieu sécurisé vers un agent utilisé situé en milieu non sécurisé.

Au démarrage de l'application agent utilisateur et conformément au protocole SIP, le logiciel s'enregistre grâce à la methode SIP REGISTER : l'invention prévoit que le logicial applicatif ajoute à ce message des informations décrivant son profil sécurisé. L'invention prévoit l'interprétation de ces données d'enregistrement comme données d'entrée pour un algorithme d'aiguillage d'appel.

D'autres caractéristiques et avantages de l'invention apparaîtront à la lumière de la description détaillée ci-après et des dessins dans lesquels :
- la **figure 1** déjà décrite représente schématiquement la gestion de communications sécurisées en milieu hétérogène et ;
- la **figure 2** est un organigramme illustrant les étapes du procédé de gestion selon l'invention.

Le document RFC3840, publié par l'organisme de normalisation IETF sous le titre « Indicating User Agent Capabilities in SIP » décrit les mécanismes permettant à un agent utilisateur d'indiquer lors d'un enregistrement SIP ses capacités et caractéristiques au serveur d'appel, qui enregistrera ces informations. Cet enregistrement du profil sécurisé sur le serveur d'appel se réalise donc dynamiquement par la phase d'enregistrement SIP, et ne nécessite ainsi aucune opération manuelle sur le serveur d'appel.

Conformément au document RFC3840, il est prévu d'introduire un paramètre, par exemple du type « sip.saudio ». En corollaire, la syntaxe ABNF (« Augmented Backus Naur Form ») est modifiée pour tenir compte de ce paramètre de la façon suivante :
Base-tags = « audio »/ »automata »/
« class » / « duplex » / « data »/
"control" / "mobility" / "description"/
"events" / "priority" / "methods" /
"schemes" / "application" / "video"/
"language" / "type " / "isfocus" /
"actor" / " text" / "extensions" /
"saudio"

On fait à nouveau référence à la **figure 1****.**

Lorsqu'un agent utilisateur UA s'enregistre auprès d'un serveur d'appel SER, il associe le paramètre « saudio » à l'adresse de contact pour notifier qu'il supporte l'usage d'une procédure de sécurité, par exemple la procédure SRTP (« Secure Real-time transport Protocol ») pour sécuriser les données audio. L'agent utilisateur déclare uniquement le paramètre « saudio » lorsqu'il requiert l'usage d'une procédure de sécurité, par exemple SRTP.

Dans le cadre de la déclaration des caractéristiques de l'agent utilisateur, il est prévu en outre d'associer au paramètre « saudio » la méthode qui supporte l'établissement d'une communication SRTP.

Ainsi, le paramètre « saudio » peut indiquer, lorsqu'il est associé à des contacts SIP, que les clés d'authentification peuvent être échangées en clair dans une communication SDP conforme au document RFC4568, mais chiffrées dans le cadre d'une procédure de sécurité de type TLS (« Transport Layer Security »).

De même, le paramètre « saudio » peut indiquer, lorsque la valeur « s/mime » est active, que les procédures conformes au document RFC3851 doivent être utilisées pour chiffrer le corps SDP.

Selon une autre réalisation, le paramètre « saudio » peut indiquer, lorsque la valeur « RFC4567 » est active, que les procédures conformes au document RFC4567 doivent être utilisées. Un protocole de gestion des clés doit également être utilisé.

Par exemple, un agent utilisateur enregistre tout d'abord des contacts SIP pour notifier que ledit agent utilisateur requiert une procédure de sécurité TLS. Ensuite, l'agent utilisateur associe le paramètre « saudio » pour déclarer qu'avec les contacts ainsi identifiées par leurs adresses, il requiert l'usage de la procédure SRTP. Alors, en réponse à cette requête, le serveur d'appel SER sauve dans sa base de données les informations correspondantes du fait que chaque appel de cet agent utilisateur utilise les procédures de sécurité TLS et SRTP.

Dans un autre exemple, suivant la même procédure, les agents utilisateurs enregistrent dans la base de données du serveur d'appel les trois méthodes mentionnées ci-avant et qui supportent l'établissement d'une communication SRTP : échange de clés de chiffrement dans le corps SDP en utilisant la procédure TLS, utilisation de la valeur S/MIME conformément au document RFC4568 ou utilisation d'un protocole de gestion de clé conformément au document RFC4567.

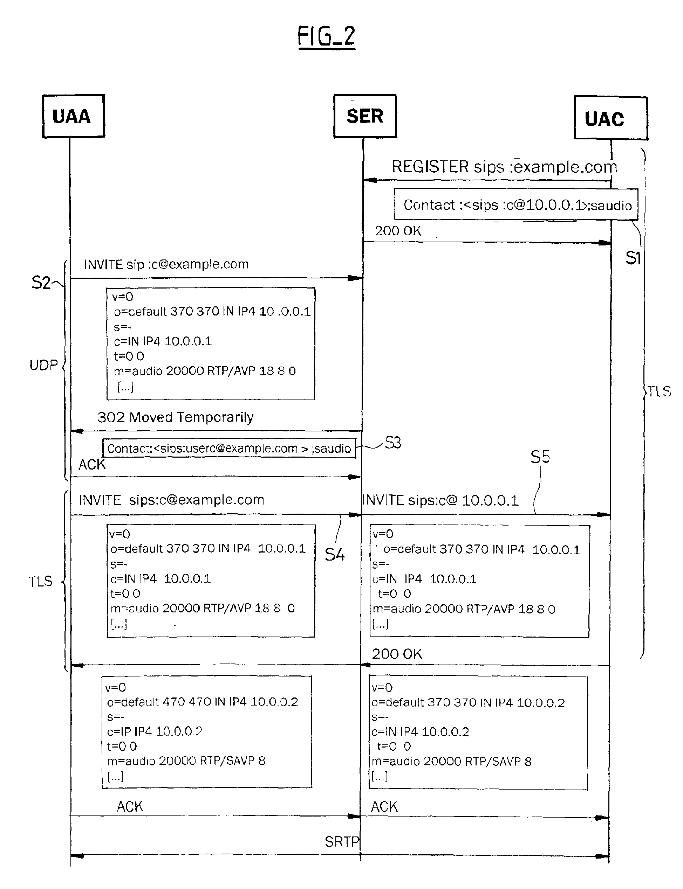

En référence aux **figures 1** et **2****,** on va maintenant décrire l'établissement de l'appel à la suite de l'étape de déclaration du profil sécurisé (« saudio ») tel que mentionné ci-avant dans lequel l'utilisateur UAA appelle l'utilisateur UAC à travers le serveur d'appel SER qui agit selon un serveur registre et un serveur Proxy.

Selon l'étape S1, grâce au paramètre « saudio » déclaré en relation avec les contacts SIP de l'utilisateur UAC lors de la transaction REGISTER, le server d'appel SER sait que l'utilisateur UAC requiert un environnement sécurisé.

Selon l'étape S2, le logiciel de l'agent 'utilisateur UAA utilise un profil non sécurisé pour émettre un appel vers l'utilisateur UAC, par exemple de type UDP pour la signalisation et le protocole RTP pour le transport des données de media.

Selon l'étape S3, le serveur d'appel SER consulte sa base de données, et retrouve le profil de l'agent utilisateur UAC enregistré lors de l'étape S1. Le profil de l'agent utilisateur UAC est sécurisé et ne correspond pas aux paramètres utilisés par le logiciel de l'agent utilisateur UAA en l'étape S2. Donc, le serveur d'appel notifie au logiciel de l'agent utilisateur UAA d'utiliser une procédure sécurisée en répondant un message de redirection « 302 Moved Temporarily » : dans cette réponse, le serveur d'appel SER notifie la nouvelle adresse du contact SIP à connecter. L'adresse de contact SIP est une adresse de contact « sips » pour la procédure TLS, associée au paramètre « saudio » pour la procédure SRTP.

En réaction à la réponse du serveur d'appel, l'agent utilisateur UAA émet un signal « INVITE » en milieu sécurisé utilisant la procédure TLS (étape S4) à destination du serveur d'appel SER. L'agent utilisateur UAA va inclure dans le message INVITE une description SDP pour un média sécurisé utilisant la procédure SRTP.

Selon l'étape S5, le serveur d'appel SER se réfère au profil d'UAC enregistré en S1. Il va transférer le message INVITE de l'étape S4 vers l'utilisateur UAC en utilisant un transport sécurisé par TLS et en retransmettant la description SDP sécurisée pour SRTP.

Lorsque l'utilisateur UAA reçoit la réponse « 302 Moved Temporarily » l'agent utilisateur UAA sait qu'il doit utiliser la procédure TLS et SRTP pour appeler l'utilisateur UAC. Ainsi, les conditions pour un appel sécurisé sont crées et respectées. Avantageusement, les clés pour la procédure SRTP peuvent être échangées de manière sûre et les signaux audio peuvent être ainsi transportés de manière chiffrés et authentifiés.

Bien évidemment, la procédure mentionnée ci-avant ne se limite pas aux signaux audio (paramètre « saudio ») mais peut s'appliquer à tout signal media autre qu'audio (par exemple création et utilisation d'un paramètre « svideo » au lieu de « saudio »).

## Revendications

1. Procédé de gestion de communications électroniques sécurisées selon le protocole SIP : ce procédé prévoit en premier lieu une étape dynamique de déclaration automatique d'un profil sécurisé à l'initiative du logiciel applicatif de l'agent utilisateur, s'appuyant sur l'enregistrement SIP (méthode REGISTER) et une extension de la RFC3840 consistant à la déclaration des capacités pour un profil sécurisé. En second lieu, le procédé prévoit un algorithme d'aiguillage de l'appel par un serveur en fonction du profil dynamiquement déclaré, en réponse à un appel émanant dudit agent utilisateur (UAA) situé en milieu sécurisé vers un agent utilisateur (UAC) situé en milieu non sécurisé.

2. Procédé selon la revendication 1, dans lequel le profil sécurisé comprend un indicateur conforme au règlement RFC3840.

3. Dispositif de gestion de communications électroniques sécurisées selon le protocole SIP : il comprend des moyens aptes à déclarer automatiquement un profil sécurisé auprès d'un serveur, s'appuyant sur l'enregistrement SIP et l'extension de la RFC3840 pour la déclaration de capacités de sécurité, à l'initiative et au profit du logiciel applicatif d'un agent utilisateur choisi. Il comprend également les moyens d'aiguillage aptes à router l'appel en fonction du profil sécurisé en réponse à un appel dudit agent utilisateur (UAA) situé en milieu sécurisé vers un agent utilisateur situé en milieu non sécurisé (UAC).
